# EUROPEAN PATENT APPLICATION

(11) **EP 1 783 524 A1**
(43) Date of publication of application: **09.05.2007**
(21) Application number: 05023940.9
(22) Date of filing: 03.11.2005
(51) Int. Cl.: G02B 6/38

(54) **Optical fibre connector coupling assembly**

(71) Applicant: Ridgemount Technologies Limited, Launton Bicester Oxfordshire OX26 5EL (GB)
(72) Inventor: Peters, Christopher Russell c/o Ridgemount, Long Crendon HP18 9BB (GB); Limbert, Mark John c/o Ridgemount Technologies, Long Crendon HP18 9BB (GB)
(74) Representative: Chapman, Helga Claire

(57) **Abstract**

An optical fibre connector coupling assembly 10 comprising a plug member 12, a socket member 14, and push-pull latching means comprising a latch channel 16 and eight sprung tines 18. The plug member 12 has a generally cylindrical body 20 and a single, cylindrical plug pin 22 extending from one end. The socket member 14 has a generally cylindrical body 24 in one end of which is provided a socket 26, of a corresponding size and shape to the plug pin 22, such that the plug pin 22 may be received within the socket 26. An engagement rib 28 of a corresponding size and profile to the latch channel 16 is provided towards the distal end of each tine 18. The plug member 12 and the tines 18 are provided within a housing 30. A lip 38 provided on the housing 30 for sealingly engaging with an O-ring seal (not shown) provided in a seal seat 40 around the socket member 14.

## Description

The invention relates to an optical fibre connector coupling assembly.

Single and multi channel optical fibre connectors and receptacles or adaptors traditionally use military or custom latching mechanisms. These may be threaded, bayonet or push-pull latching, or a combination or these designed to fix the connector orientation.

According to an aspect of the invention there is provided an optical fibre connector coupling assembly comprising:
a plug member provided with at least one at least part cylindrical plug pin extending from one end;
a socket member having at least one correspondingly shaped socket provided in one end for receiving the at least one plug pin; and
push-pull cylindrical latching means comprising:
   at least one latch recess provided on one of the plug member and the socket member; and
   a plurality of sprung tines provided around the other of the plug member and the socket member, the tines having engagement formations provided at their distal ends, for releasable engagement with the at least one latch recess.

The plug member may be provided with a single, cylindrical plug pin. The socket member preferably has a single correspondingly shaped socket provided in its one end.

The plug member may alternatively be provided with a plurality of spaced apart part cylindrical plug pins, and is most preferably provided with two spaced apart part cylindrical plug pins. The two part cylindrical plug pins are preferably provided generally diametrically opposite one another. The two part cylindrical plug pins may be of the same size or of different sizes.

The socket member preferably has a corresponding plurality of correspondingly shaped and located sockets provided in its one end.

The plug member and the socket member are preferably generally cylindrical or generally rod-shaped.

The at least one latch recess preferably comprises at least one latch channel. Preferably, a single latch channel extends around substantially the full external surface of one of the plug member and the socket member.

The sprung tines are preferably provided in a substantially equally spaced relationship with one another. Preferably, each sprung tine is part cylindrical in shape. The engagement formations preferably comprise engagement ribs of a corresponding size and profile to the or each latch recess, such that they are closely received within the or each latch recess.

The latch channel is preferably provided on the socket member and the tines are provided around the plug member.

The optical fibre connector coupling assembly preferably further comprises an external housing within which the plug member and tines are provided. The external housing preferably comprises a lip at its distal end for sealingly engaging with a seal member provided around the socket member. The seal member preferably comprises an 0-ring seal. The seal member is preferably located within a seal seat extending around the external surface of the socket member.

Embodiments of the invention will now be described by way of example only, with reference to the accompanying drawings, in which:
Figure 1 is a diagrammatic cross-sectional view of an optical fibre connector coupling assembly according to a first embodiment of the invention;
Figure 2 is a diagrammatic representation of the plug member of the assembly of Figure 1;
Figure 3 a diagrammatic representation of the socket member of the assembly of Figure 1;
Figure 4 shows the assembly of Figure 1 with the plug member received within the socket member;
Figure 5 is a diagrammatic cross-sectional view of an optical fibre connector coupling assembly according to a second embodiment of the invention;
Figure 6 is a diagrammatic representation of the plug member of the assembly of Figure 5;
Figure 7 a diagrammatic representation of the socket member of the assembly of Figure 5; and
Figure 8 shows the assembly of Figure 5 with the plug member received within the socket member.

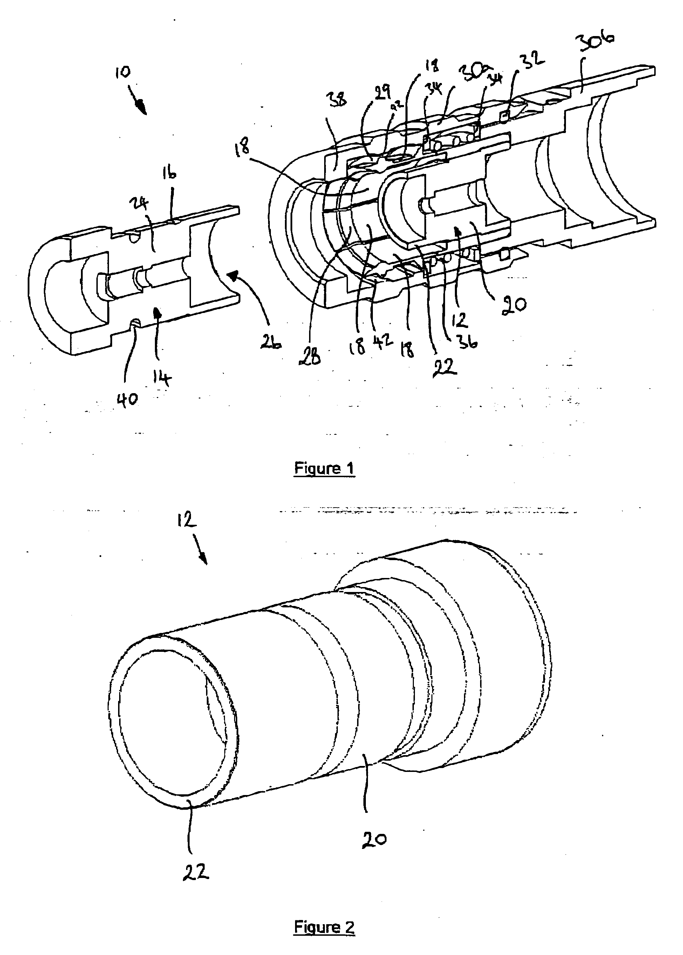

Referring to Figures 1 to 4, a first embodiment of the invention provides an optical fibre connector coupling assembly 10 comprising a plug member 12, a socket member 14 and push-pull latching means comprising a latch channel 16 and eight sprung tines 18 (only four are shown).

The plug member 12 has a generally cylindrical body 20 and a single, cylindrical plug pin 22 extending from one end of the body 20.

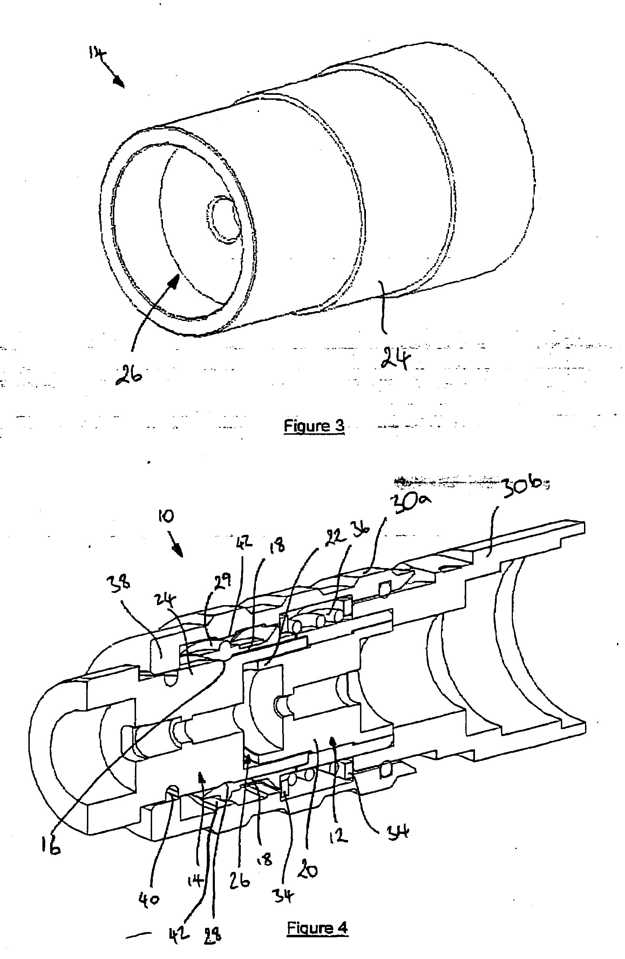

The socket member 14 has a generally cylindrical body 24 in one end of which is provided a socket 26, of a corresponding size and shape to the plug pin 22, such that the plug pin 22 may be received within the socket 26, as shown in Figure 4.

In this example, eight sprung tines 18 are provided around the plug member 12. Each tine 18 comprises slightly less than one-eighth of a cylinder, the tines 18 being provided in a spaced relationship and equally spaced from one another. An engagement formation in the form of an engagement rib 28 is provided towards the distal end of each sprung tine 18, on its internal face. The engagement ribs 28 are of a corresponding size and profile to the latch channel 16, such that, in use, they are closely received within the latch channel 16.

A coupling rib 29 is provided opposite each engagement rib 28, on the underside of each tine 18.

The assembly 10 further comprises an external housing 30 within which plug member 12 and the tines 18 are provided. The housing comprises a front housing 30a and a rear housing 30b. The rear of the plug member 12 is received within the front of the rear housing 30b. The front housing 30a encloses the front of the plug member 12 and the tines 18. The front of the rear housing 30b is received within the rear of the front housing 30a, with an O-ring seal 32 is provided between the front housing 30a and the rear housing 30b. Coupling washers 34 and a coupling spring 36 are provided around the sprung tines 18, between the tines 18 and the front housing 30a.

The front housing 30a has a lip 38 provided at its distal end for sealingly engaging with an O-ring seal (not shown) provided around the socket member 14. The O-ring seal is located within a seal seat 40 formed around the socket member 14.

A coupling ridge 42 is provided around the internal surface of the front housing 30a, for coupling with the coupling ribs 29 on the tines 18.

In use, the cylindrical latching mechanism is engaged by pushing the front housing 30a forward, towards the socket member 14, causing the coupling spring 36 to compress and moving the coupling ridge 42 to one side of the coupling ribs 29, and thereby out of contact with the coupling ribs 29. The tines 18 are now free to deform outwards, over the external surface of the socket member 14.

With the front housing 30a held in the forward position, the socket member 14 is pushed towards the plug member 12 and the tines 18 deform outwards to receive the socket member 14. The socket member 14 is pushed toward the plug member 12 until the plug pin 22 is received within the socket 26, and the engagement ribs 28 on the tines 18 are located in the latch channel 16. The profile of the latch channel 16 and of the engagement ribs 28 is designed to allow easy engagement and release of the engagement ribs 28 with the latch channel 16.

The front housing 30a is then released, and moves, under the action of the coupling spring 36, back to its initial position in which the coupling ribs 29 are again in coupling contact with the coupling ridge 42. The coupling ridge 42 thereby clamps the tines 18 in position around the socket member 14, providing high hoop strength to the coupling assembly 10.

The cylindrical latching mechanism is released by pulling the front housing 30a away from the socket member 14, thereby compressing the coupling spring 36 and moving the coupling ridge 42 to the other side of the coupling ribs 29, and thereby out of contact with the coupling ribs 29. The tines 18 are then free to deform outwards again, allowing the socket member 14 to be removed from the plug member 12. As the socket member 14 is pulled away from the plug member 12, the engagement ribs 28 disengage from the latch channel 16, and pass over the external surface of the socket member 14. Once the socket member 14 is removed from the plug member 12, the front housing 30a is then released, and moves, under the action of the coupling spring 36, back to its initial position in which the coupling ribs 29 are again in coupling contact with the coupling ridge 42.

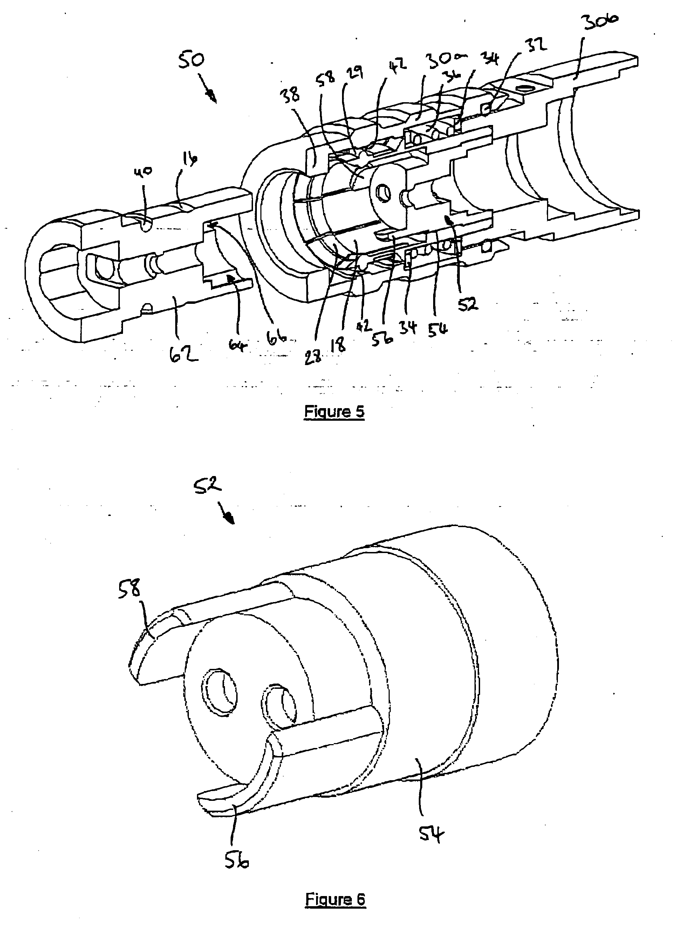

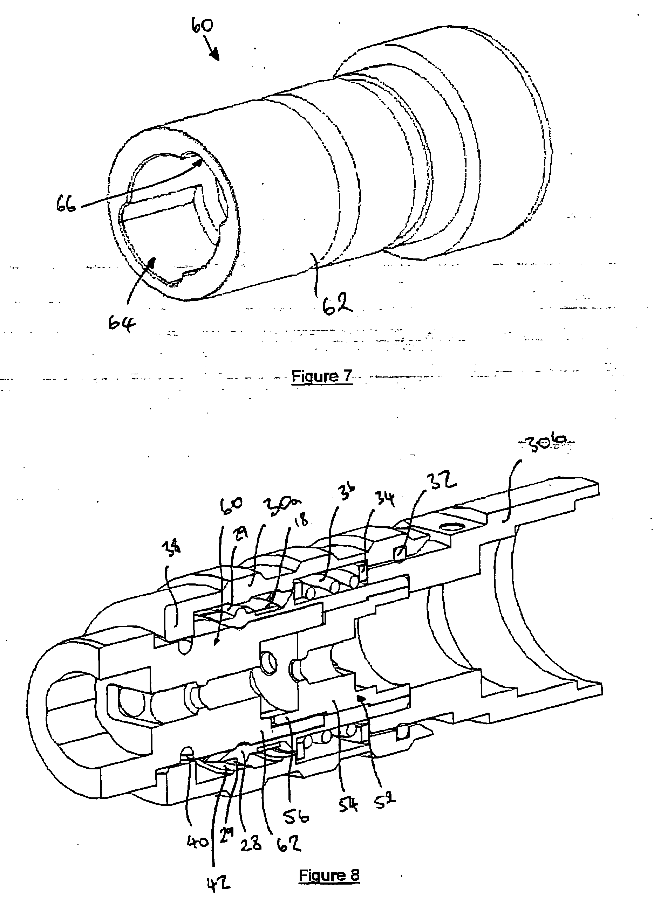

An optical fibre connector coupling assembly 50 according to a second embodiment of the invention is shown in Figures 5 to 8. The coupling assembly 50 of this embodiment is substantial the same as the coupling assembly 10 of the previous embodiment, with the following modifications. The same reference numbers are retained for corresponding features.

In this example, the plug member 52 has a generally cylindrical body 54 and two plug pins 56, 58 extending from one end of the body. The plug pins 56, 58 are both part-cylindrical in shape and are provided generally diametrically opposite one another. The first plug pin 56 is circumferentially wider than the second plug pin 58, but both plug pins 56, 58 are of the same length and thickness.

The socket member 60 has a generally cylindrical body 62 in one end of which are provided two correspondingly shaped and located sockets 64, 66, for receiving the plug pins 56, 58.

Various modifications may be made without departing from the scope of the present invention. A different number of sprung tines may be provided and they may be arranged in a different spaced relationship. The engagement formations and the latch channel may have a different size and profile to those shown. A different number of plug pins may be provided and/or the plug pins may be of a different size and configuration to those shown. The socket member with therefore similarly be provided with a different number and/or size and configuration of sockets.

The cylindrical latching mechanism of the described optical fibre connector coupling assemblies ensures that contact is provided between the plug member and the socket member symmetrically around their full circumference, thereby giving the assemblies large tensile load bearing capacities.

The plug member and socket member together provide support for an axial load, precision for the alignment of optical fibres and an orientation key for different mating families of the connector assembly.

The cylindrical latching mechanism permits the optical fibre connector coupling assembly to be free to rotate around its central axis. The optical fibre connector coupling assembly of the first embodiment, when used with non contact fibre alignment technology, provides a rotary joint optical fibre connector.

The optical fibre connector coupling assembly of the second embodiment, when used with physical contact or non contact alignment and/or multiple contact optical fibre alignment technology, provides a high precision multiple fibre optical connector.

The cylindrical form of the external housing provides for environmental sealing of the plug member, socket member and tines, and any internal optical components.

## Claims

1. An optical fibre connector coupling assembly comprising:
a plug member provided with at least one at least part cylindrical plug pin extending from one end;
a socket member having at least one correspondingly shaped socket provided in one end for receiving the at least one plug pin; and
push-pull cylindrical latching means comprising:
at least one latch recess provided on one of the plug member and the socket member; and
a plurality of sprung tines provided around the other of the plug member and the socket member, the tines having engagement formations provided at their distal ends, for releasable engagement with the at least one latch recess.

2. An optical fibre connector coupling assembly as claimed in claim 1, wherein the plug member is provided with a single, cylindrical plug pin and the socket member has a single correspondingly shaped socket provided in its one end.

3. An optical fibre connector coupling assembly as claimed in claim 1, wherein the plug member is provided with a plurality of spaced apart part cylindrical plug pins, and the socket member has a corresponding plurality of correspondingly shaped and located sockets provided in its one end.

4. An optical fibre connector coupling assembly as claimed in claim 3, wherein the plug member is provided with two spaced apart part cylindrical plug pins.

5. An optical fibre connector coupling assembly as claimed in claim 4, wherein the two part cylindrical plug pins are provided generally diametrically opposite one another.

6. An optical fibre connector coupling assembly as claimed in any preceding claim, wherein the at least one latch recess comprises a single latch channel extending around substantially the full external surface of one of the plug member and the socket member.

7. An optical fibre connector coupling assembly as claimed in any preceding claim, wherein the sprung tines are provided in a substantially equally spaced relationship with one another.

8. An optical fibre connector coupling assembly as claimed in claim 7, wherein each sprung tine is part cylindrical in shape and the engagement formations comprise engagement ribs of a corresponding size and profile to the or each latch recess, such that they are closely received within the or each latch recess.

9. An optical fibre connector coupling assembly as claimed in any of claims 6 to 8, wherein the latch channel is provided on the socket member and the tines are provided around the plug member.

10. An optical fibre connector coupling assembly as claimed claim 9, wherein the optical fibre connector coupling assembly further comprises an external housing within which the plug member and tines are provided, the external housing comprising a lip at its distal end for sealingly engaging with a seal member provided around the socket member.
